Europäisches Patentamt
European Patent Office
Office européen des brevets

(19)

(11) Publication number: **0 260 017 A1**

(12) **EUROPEAN PATENT APPLICATION**

(21) Application number: 87307522.0

(22) Date of filing: 25.08.87

(51) Int. Cl.[4]: C08G 69/00 , C08G 69/48 , D01C 3/00

(30) Priority: 02.09.86 GB 8621171

(43) Date of publication of application: 16.03.88 Bulletin 88/11

(84) Designated Contracting States: BE CH DE FR GB IT LI NL

(71) Applicant: PRECISION PROCESSES (TEXTILES) LIMITED
Dylan Laboratories Ambergate
Derby DE5 2EY(GB)

(72) Inventor: Szpala, Anthony
39 Stanton Avenue
Belper Derby(GB)

(74) Representative: Pennant, Pyers et al
STEVENS HEWLETT & PERKINS European Patent Attorneys 5 Quality Court Chancery Lane
London WC2A 1HZ(GB)

(54) **Polyamides, a process for the preparation thereof and their use in a method for the treatment of wool.**

(57) A polyamide resulting from the reaction in any order of

a) a bifunctional agent of the formula:

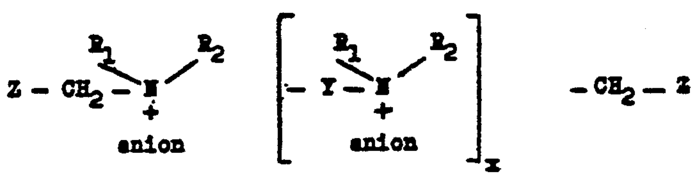

wherein x is zero or a whole number up to 7,
Z is selected from

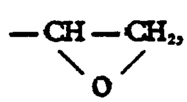

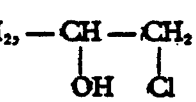

and

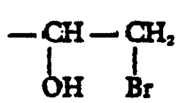

each of $R_1$ and $R_2$ is selected from lower alkyl and lower hydroxyalkyl radicals,
Y is selected from alkylene radicals with from 2 to 6 carbon atoms, 2-hydroxy-1,3-propylene radicals, and the radicals

EP 0 260 017 A1

$$-CH_2-CH_2-NH-CO-NH-CH_2-CH_2- \text{ and}$$
$$-CH_2-CH_2-CH_2-NH-CO-NH-CH_2-CH_2-CH_2-,$$

with the proviso that when x is greater than 2(and therefore more than 2 symbols y are present) each of the symbols y need not necessarily have the same significance; with

b) the reaction product of i) a dicarboxylic acid of the formula:

$HOOC\text{-}C_m H_{2m}\text{-}COOH$

in which m is an integer of from 4 to 8, or a functional derivative of said dicarboxylic acid, and ii) a polyalkylene polyamine containing two primary amino radicals, at least one secondary amino radical and at least two alkylene radicals, the molecular proportion of i) and ii) being 0.85:1 to 1.2:1, and

c) epichlorohydrin.

A method for the treatment of wool so as to impart shrink resistance is also provided. The method comprises the steps of:-

i) subjecting the wool to an oxidative chlorinating pretreatment, and

ii) subsequently treating the wool with an aqueous solution of a polymer so as to cause the polymer to be applied to the wool fibres. The polymer used in step ii) is a polyamide of the aforementioned type.

# POLYAMIDES, A PROCESS FOR THE PREPARATION THEREOF AND THEIR USE IN A METHOD FOR THE TREATMENT OF WOOL

THis invention relates to cationic water soluble polyamides and a process for the preparation thereof. Furthermore, the polyamides may be used in a process for the treatment of wool so as to impart shrink resistance.

British Patent No. 1,213,745 describes various cationically active water soluble polyamides and processes for their production. These polyamides are said to be useful in treating waster liquor, for example as retention agents, flotation adjuvants, drainage aids and as filtration aids for filtering aqueous suspensions, especially in the paper and cardboard making industry and in connection with paper making machines. There is no suggestion that any of these compounds could be used in a process for the treatment of wool. Indeed, treatment of wool with cationically active water soluble polyamides in this form would result in an insignificant degree of shrink resistance.

U.S. Patent No. 4,093,605 describes auxiliary agents consisting essentially of the reaction product formed by cross linking a first intermediate product with a second intermediate product and a polyfunctional compound consisting of either epichlorohydrin or a dihalogenoalkane. The first intermediate product comprises at least one polyamine which contains quaternary nitrogen and which is formed by the action of polyvalent and/or monovalent amines on the reaction products of a secondary amine hydrochloride with epichlorohydrin. The second intermediate product comprises at least one resinous basic polyamino-amide consisting of, for example, a dicarboxylic acid and a polyalkylene polyamine. The auxiliary agents are said to be intended for improving the retention of flushable solids, the drainage of suspensions and the rapid treatment of industrial waters, effluents and sludges, especially in paper making.

Two-step shrink-proofing processes in which wool is treated first with a chlorinating agent and subsequently with a pre-formed synthetic polymer are well known. A wide variety of polymers can be used in aqueous solution or dispersion, including polyamide-epichlorohydrin resins and polyacrylates. A review of work in this field by J. Lewis appears in Wool Science Review, May 1978, pages 23-42.

The CSIRO chlorin-Hercosett procedure is considered to be the first commercially acceptable polymer process for the continuous treatment of wool tops. This process comprises the following sequential operations performed on slivers or tops:

i) Acid chlorination, usually with a solution of sodium hypochlorite or dichloroisocyanuric acid (DCCA).

ii) Neutralisation and anti-chlorination.

iii) Rinsing.

iv) Application of a resin. A cationic polyamide-epichlorohydrin resin, e.g. Hercosett 125 (Hercules Chemical Company), is used.

v) Application of Softener.

Kroy Unshrinkable Wools Ltd. developed a method of chlorinating wool by means of a vertical deep immersion and this often serves as a pretreatment for the subsequent application of shrink-proofing resins for the attainment of Superwash levels of machine washability (IWS TM185 [180 min., 15 1 Cubex]).

British Patent No. 1,074,731 and U.S. Patent Nos. 2,926,154 and 2,961,347 describe two-step shrink-proofing processes of the above type and resins or polymers suitable for use therein. These polymers are reactive polyamides. The polyamide is derived from a polyalkylene polyamine and a dicarboxylic acid, e.g. diethylenetriamine and adipic acid, and is prepared by reaction with epichlorohydrin.

Although these polyamide-epichlorohydrin resin based processes of the prior art confer good levels of shrink resistance, they result in wool which is considered by many to have an undesirably harsh handle. To overcome this problem a softening agent has to be employed. None of these processes produce wood which has both excellent shrink resistance and excellent handle,without the need to add a softening agent, and this highly desirable combination of properties has until now proved elusive.

The present invention provides polyamides and a process for their production. The polyamides of this invention can be used in methods for the treatment of wool, in place on conventionally used polymers, and result in wool having both excellent shrink resistance and excellent handle. There is no need to employ a softening agent.

The polyamide of the present invention results from the reaction in any order of

a) a bifunctional agent of the formula:

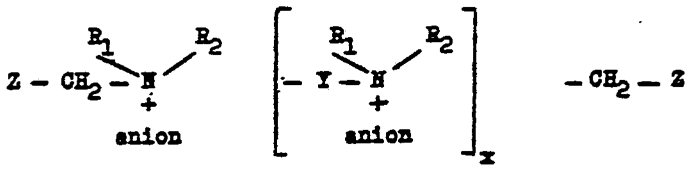

wherein x is zero or a whole number up to 7,
Z is selected from

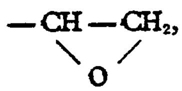 , 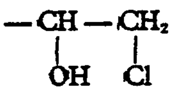

and 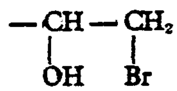

each of $R_1$ and $R_2$ is selected from lower alkyl and lower hydroxyalkyl radicals,
Y is selected from alkylene radicals with from 2 to 6 carbon atoms, 2-hydroxy-1,3-propylene radicals, and the radicals

$$-CH_2-CH_2-NH-CO-NH-CH_2-CH_2- \text{ and}$$
$$-CH_2-CH_2-CH_2-NH-CO-NH-CH_2-CH_2-CH_2-,$$

with the proviso that when x is greater than 2 (and therefore more than 2 symbols y are present) each of the symbols y need not necessarily have the same significance; with

b) the reaction product of i) a dicarboxylic acid of the formula:

$HOOC-C_m H_{2m}-COOH$

in which m is an integer of from 4 to 8, or a functional derivative of said dicarboxylic acid, and ii) a polyalkylene polyamine containing two primary amino radicals, at least one secondary amino radical and at least two alkylene radicals, the molecular proportion of i) and ii) being 0.85:1 to 1.2:1; and

c) epichlorohydrin.

As used herein, the term "lower" refers to alkyl radicals or hydroxy alkyl radicals with from 1 to 6, preferably 1 to 4, carbon atoms.

The bifunctional agent a) may be obtained by reaction of epichlorohydrin with a secondary amine of the formula:

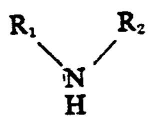 I

wherein each of $R_1$ and $R_2$ is selected from lower alkyl or lower hydroxy alkyl radicals, or with a bis-tertiary amine of the formula

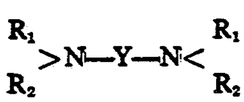 II

in which Y is selected from alkylene radicals with from 2 to 6 carbon atoms and radicals of the formula

$$-CH_2-CH_2-NH-CO-NH-CH_2-CH_2- \text{ and}$$
$$-CH_2-CH_2-CH_2-NH-CO-NH-CH_2-CH_2-CH_2-,$$

and each of the symbols $R_1$ and $R_2$ has the above significance, or with a mixture of amines I and II, or salts thereof.

As for component b), the dicarboxylic acid is preferably adipic acid. The polyalkylene polyamine may be selected from, for example, triethylenetetramine, tetraethylenepentamine, tri-(1,2-propylene)-tetramine, di(1,3-propylene)-triamine and di(1,4-butylene)-triamine, and is most preferably diethylenetriamine.

The invention further provides a process for the preparation of a polyamide which comprises reacting components a), b) and c) referred to above. It should be understood that the order of reaction is not critical and, for example, the epichlorohydrin component c) may be reacted initially with either component a) or component b) or both.

A particularly preferred polyamide of the present invention results from

a) reaction with bifunctional agent of the formula

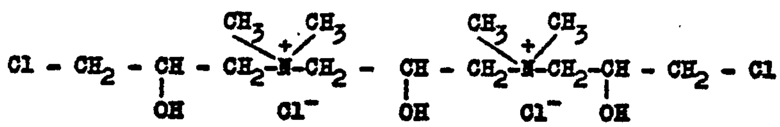

III

of the reaction product of diethylenetriamine and adipic acid to form a water-soluble intermediate product, and

b) reaction of the intermediate product with epichlorohydrin.

Reacting the reaction product of, for example, diethylenetriamine and adipic acid with a bifunctional agent of the above formula III produces a cationically active water soluble polymer. The repeating unit of this polymer is built up from three secondary amine groups and one tertiary amine group (the tertiary amine being formed from the reaction of the cross-linker chlorine with a fourth secondary amine group). Schematically the repeating units may be represented as follows:

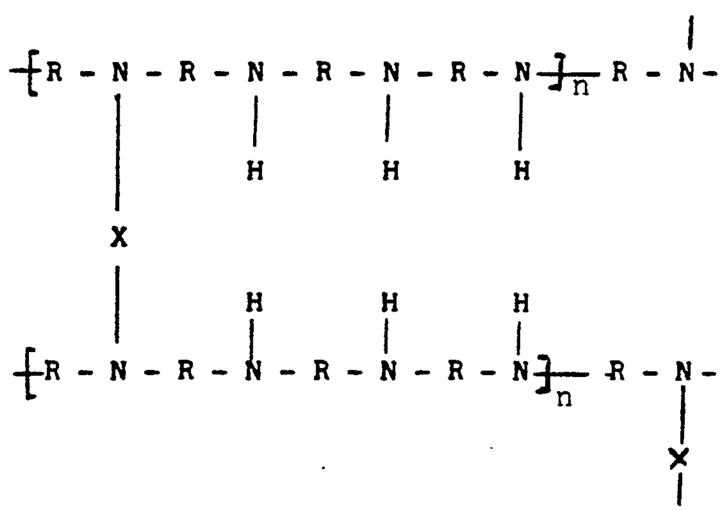

wherein R = 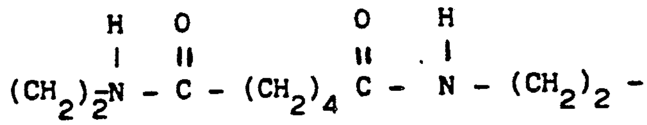

and X = 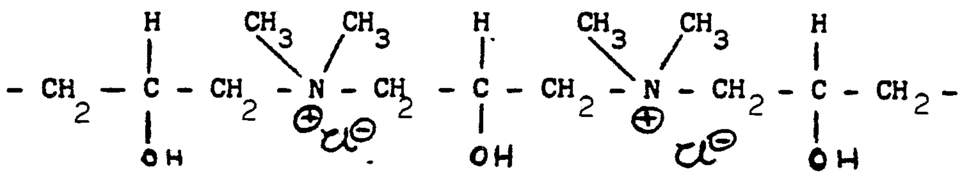

A polyamide of the present invention may be prepared by reacting the above polymer with epichlorohydrin. If desired, the reaction may be performed under acidic conditions. The chemistry of the reaction of amines with an epihalohydrin under such conditions is well established and it is to be expected that the secondary and tertiary amines will behave in the same way. While we do not wish to be limited by any particular mechanism for the reaction, or precise formula for the product, it is expected that the reaction of the above polymer with epichlorohydrin and an acid, e.g. hydrochloric acid, yields a polyamide as shown below:

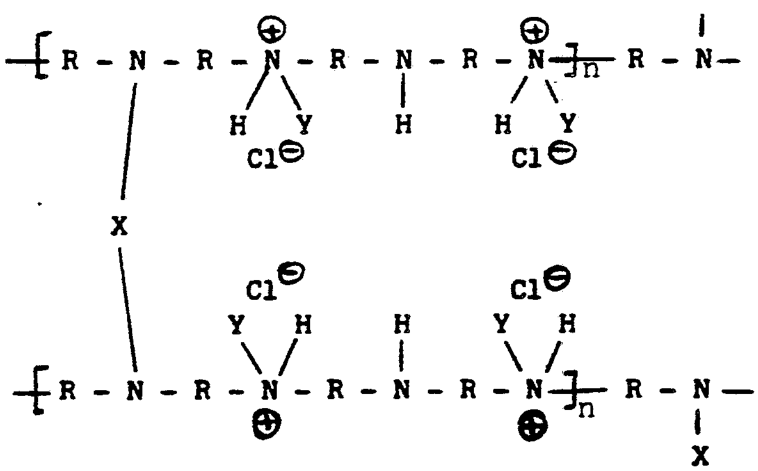

wherein R and X are as above.

and Y = 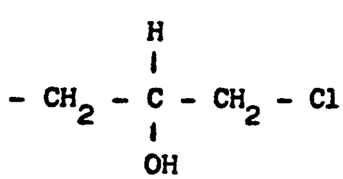

It is of course difficult to prove exactly which amine groups are affected and it must be stressed that the above represents only the simplest theoretical or idealised product from the reaction. In reality, however, the reaction will almost certainly be much more complicated. Acids, such as hydrochloric acid, can combine with both secondary and tertiary amine groups present in the polymer and this could result in a mixture of secondary amine, secondary amine hydrochloride, tertiary amine and tertiary amine hydrochloride. A number of reactions could occur between epichlorohydrin and the acidified polymer, for example, the

formation of chloropropanol. Some cross linking of the polymer could occur in situ as the reaction with epichlorohydrin proceeds, e.g. between the chlorine of the chloropropanol groups formed and free secondary or tertiary amine groups on another polymer molecule. It is repeated, therefore, that we do not wish to be limited by any particular mechanism for the reaction or precise formula for the product.

The use of epihalohydrins, particularly epichlorohydrin, to react with amine groups is well known. In the process of the present invention the polymer is reacted with an epihalohydrin, preferably epichlorohydrin. If the reaction is performed under acidic conditions, the use of epichlorohydrin and hydrochloric acid is particularly preferred, preferably using 0.5 equivalents of epichlorohydrin and 0.5 equivalents of hydrochloric acid. A range of amounts from 0.25 equivalents of hydrochloric acid/0.25 equivalents of epichlrohydrin to 3.33 equivalents hydrochloric acid/4.17 equivalents epichlorohydrin has been used successfully in the reaction. However, polymers prepared from 0.25 equivalents hydrochloric acid/0.25 equivalents epichlorohydrin and below tend to be rather unstable-often gelling before the reaction period (24 hrs) is over. There is no real advantage in using more than 0.5 equivalents of hydrochloric acid and 0.5 equivalents of epichlorohydrin. Certainly when the resulting polymers are used in methods for the treatment of wool the degree of shrink resistance attained is not significantly increased by higher levels.

The process of the present invention may be performed in the absence of hydrochloric acid, or any other acid. Indeed, when polyamide prepared under non-acidic conditions is applied to wool it seems that an improved level of shrink resistance is achieved. Other properties, such as colour fastness, may also be improved.

The temperature at this stage of the reaction is also important, and should not normally exceed 40°C. If the reaction is carried out at too high a temperature, premature gelling can occur. Also, if the reaction is carried out at much less than 20°C its rate may be too slow.

The polyamides of the present invention are suitable for use in methods for the treatment of wool so as to impart shrink resistance comprising the steps of:-

i) subjecting the wool to an oxidative chlorinating pretreatment, and

ii) subsequently treating the wool with an aqueous solution of a polymer so as to cause the polymer to be applied to the wool fibres.

When the polyamides of the present invention are used in step ii) of such methods, in place of conventionally used polymers, the treated wool has both excellent shrink resistance and excellent handle. The polyamides may be used in both batch and continous processes for the treatment of wool.

In addition, other uses are envisaged for the polyamides of this invention. For example, in cosmetics (e.g. hair shampoos and conditioners), as flocculants, in treating waste liquor, as retention agents, flotation adjuvants, drainage aids, filtration aids and for similar uses, particularly in the paper and carboard making industry.

The invention will now be illustrated with reference to the following Examples. Example 1 describes the preparation of a cationic water soluble polyamide. Examples 2 and 3 describe variations of the process of the present invention whereby the polyamide of Example 1 is reacted with epichlorohydrin. The remaining Examples illustrate the use of the resulting polyamides in processes for the treatment of wool (both batch and continuous processes) and demonstrate the levels of shrink resistance and the handle achieved.

EXAMPLE 1

A cationic water soluble polyamide is prepared using a three stage synthesis. All parts and percentages are by weight.

i) Reaction of a dicarboxylic acid with a polyalkylene polyamine

109 kg (1.06 kg mol) of diethylenetriamine are diluted with 40 kg of water in a vessel provided with a stirrer while applying external cooling in such a way that the internal temperature remains below 70°C. Thereafter 146 kg (1.00 kg mol) of powdered adipic acid are added sufficiently slowly for the inner temperature to be maintained at 50-90°C by external cooling. The vessel with stirrer is closed and provided with a fractionating column which is joined to a descending cooler. Thereafter, during 1 hour, heating to 120-130°C by means of an oil bath under an atmosphere of nitrogen is effected followed by heating during 6 hours to an internal temperature of 170-175°C. The water used for dissolution and that which results during the condensation is thus distilled off through the column, but less than 0.4 kg of diethylenetriamine is entrained in this way by the water vapour. Stirring is continued for a further 3 hours at 170-175°C and the

column with the descending cooler is then replaced with a reflux condenser. After cooling to 150-160°C, 219 kg of water are added in such a way that the inside temperature gradually falls to 100-105°C under continuous reflux. Boiling is continued for one hour under reflux; after cooling, a clear solution of the intermediate product is obtained which contains 50% of solid substance.

ii) Production of the bifunctional agent .

205.5 kg of ice are mixed with 112.5 kg of 40% dimethylamine solution (1 kg mol) in a kettle of stainless steel provided with a stirrer and 100 kg of a 36.5% hydrochloric acid solution (1 kg mol) are added in such a way that the inner temperature remains below 25°C. A solution of dimethylammonium chloride of pH value 4-7 results. A further 112.5 kg of a 40% dimethylamine solution (1 kg mol) are added and then 277.5 kg of epichlorohydrin are run in sufficiently slowly so that the internal temperature can be kept at 28-32°C by external cooling. The reaction is allowed to go to completion at this temperature for a few hours and a clear solution results which contains 50% of cross linking agent of sufficient purity of the formula:

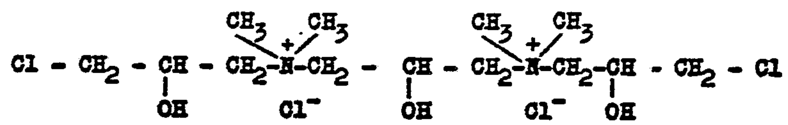

iii) Reaction of the products from steps i) and ii)

10 kg of the 50% product solution of step i) are mixed with 2.52 kg of the 50% bifunctional agent solution obtained in step ii) and with 8.38 kg of water in a heatable kettle provided with stirrer. While stirring well, heating is effected for 1 hour to 90°C in an atmosphere of nitrogen and that temperature is maintained for 2 hours. After cooling, a 30%, clear,fairly viscous solution of a cross linked, cationically active polyamide is obtained.

EXAMPLE 2

A polyamide of the present invention is prepared by reacting the product of Example 1 with epichlorohydrin in the presence of hydrochloric acid.

875 kg of the polymer (26% solids) are placed in a suitable reactor. 49.4 kg of hydrochloric acid (30% strength) are diluted in 38 kg of water. The diluted hydrochloric acid solution is then added to the polymer and thoroughly mixed with stirring. The temperature is maintained at about 25°C (but not less than 20°C). Stirring is continued throughout the reaction. 37.6 kg of epichlorohydrin are then added to the acidified polymer solution and the mixture stirred at ambient temperature for a further 24 hours. Care must be taken to ensure that the temperature does not exceed about 25°C during this period. The resultant polyamide is stabilised with formic acid to a pH of 3.5 ± 0.1 (as measured on a 5% solids solution) and consists of approximately 28% solids and 72% water. About 20 kg of formic acid (90% strength) is required to reach the desired pH. This step is important since storage at too high a pH may lead to gelling within only a few days.

The above quantities of materials yield about 1 tonne of the polyamide product. However, after stabilisation with formic acid the total weight will obviously be a little greater than 1 tonne.

EXAMPLE 3

A polyamide of the present invention is prepared by reacting the product of Example 1 with epichlorohydrin.

875 kg of the polymer (26% solids) are placed in a suitable reactor..87.4 kg of water are added and thoroughly mixed with stirring. The temperature is maintained at about 25°C. Stirring is continued throughout the reaction. 37.6 kg of epichlorohydrin are then added to the polymer solution and the mixture stirred at ambient temperature for a further 24 hours. Care must be taken to ensure that the temperature does not exceed about 25°C during this period. The resultant polyamide is stabilised with formic acid to a pH of 3.5 ± 0.1 (as measured in a 5% solids solution).

The above quantities of materials yield 1 tonne of the polyamide product. However, after stabilisation with formic acid the total weight will obviously be a little greater than 1 tonne.

EXAMPLE 4

Polyamides of the present invention prepared according to Example 2(Polyamide A) and Example 3-(Polyamide B) were used in three different types of batch methods (I, II and III) for the treatment of wool. As can be seen from the shrinkage results the use of these polyamides results in a good level of shrink resistance in the wool.

METHOD I

The polyamides were applied by exhaustion (liquor ratio 30:1) at various levels and pH 9.0 to 2/24's Botany wool swatches (knitted to a cover factor of 1.29 Direct Tex) which had been pretreated in top form with Dylan 1:1 XC2 (i.e. 1 part sodium dichloroisocyanurate containing 0.6% available chlorine in the presence of 1 part potassium permonosulphate). This pretreatment is described more fully in our British Patent No. 1,073,441. The untreated polymer product of Example 1(Polyamide C) was also applied to a swatch for comparative purposes. The swatches were then tested for shrink resistance by the I.W.S. TM 185 method for 3 hours in a Cubex machine.

The shrinkage results obtained are given below:-

| Polymer Application Level | % Area Felting Shrinkage TM 185 (3 hours) |
|---|---|
| i 0.6% (solids) Polyamide A | - 23.3 |
| ii 1.2% (solids) Polyamide A | - 6.3 |
| iii 1.8% (solids) Polyamide A | - 5.0 |
| iv 1.8% (solids) Polyamide C (untreated) | - 49.8 |
| v Pretreated wool swatch only (no polymer application) | - 62.0 |

METHOD II

The polyamides were applied at 0.6% (solids) and pH 9.0 to 2/24's Botany wool swatches (knitted to a cover factor of 1.29 Direct Tex) which had been pretreated in top form with 1.5% available chlorine, from sodium hypochlorite, in a horizontal pad mangle.The shrinkage results obtained (measured by the above test method) are given below:-

| Polymer Application Level | % Area Felting Shrinkage TM 185 ( 3 hours) |
|---|---|
| i 0.6 % (solids) Polyamide A | - 4.0 |
| ii Pretreated wool swatch (no polymer application) | - 53.8 |

METHOD III

The polyamides were applied at pH 9.0 to 2/24's Botany wool swatches (knitted to a cover factor of 1.29 Direct Tex) which had been pretreated in top form with 1.5% available chlorine from sodium hypochlorite in a Kroy machine. The swatches were then tested to the I.W.S. method using 5 x 5A wash cycles in a Wascator machine. The shrinkage results obtained are given below:-

| Polymer Application Level | % Area Felting Shrinkage 5 x 5A |
|---|---|
| i 1.0% (solids) Polyamide A | - 8.6 |
| ii 1.2 % (solids) Polyamide A | - 7.1 |
| iii 1.5 % (solids) Polyamide A | - 2.3 |
| iv 1.0% (solids) Polyamide B | - 3.4 |
| v Pretreated wool swatch (no polymer application) | - 44.1 |

EXAMPLE 5

Polyamides of the present invention were prepared according to Examples 2 and 3 except that the quantities of hydrochloric acid and/or epichlorohydrin used were varied.

| | Hydrochloric acid (equivalents) | Epichlorohydrin (equivalents) |
|---|---|---|
| Polyamide A | 0.5 | 0.5 |
| Polyamide A' | 0.5 | 1.0 |
| Polyamide A" | 1.0 | 2.0 |
| Polyamide B | - | 0.5 |
| Polyamide B' | - | 1.0 |
| Polyamide B" | - | 2.0 |

The polyamides were applied to Botany wool swatches and the shrink resistance measured according to Method III of Example 4. The results were as follows:

| | Polymer Application Level | % Area Felting Shrinkage 5 x 5A |
|---|---|---|
| i | 1.0% (solids) Polyamide A | -8.6 |
| ii | 1.0% (solids) Polyamide A' | -6.1 |
| iii | 1.0% (solids) Polyamide A" | -9.4 |
| iv | 1.0% (solids) Polyamide B | -3.4 |
| v | 1.0% (solids) Polyamide B' | -4.3 |
| vi | 1.0% (solids) Polyamide B" | -2.2 |
| vii | Pretreated wool swatch (no polymer application) | -46.9 |

EXAMPLE 6

A polyamide of the present invention (Polyamide A) was used in a continuous method for the treatment of wool. Once again, the shrinkage results demonstrate that the polyamide imparts a high level of shrink resistance in the wool.

64's quality wool tops were treated on commercial backwasher ranges with two chlorine containing continuous oxidation shrink resist pretreatments by well known standard procedures described in British Patent Specification Nos. 1,475,367 and 2,044,310.

After passing through the usual antichlor treatment bowl, the wool was passed through a bowl containing the Polyamide A at pH 9.0 so that the wool picked up the required % polymer solids and finally the tops were passed through a dryer operating at 75-80°C. The wool was spun to 2/24's worsted count and knitted to a cover factor of 1.29 Direct Tex. The swatches were tested to the I.W.S. method using either 2 x 5A wash cycles or 5 x 5A wash cycles in a Wascator machine.

Treatment conditions and the shrinkage results obtained are given below:-

| Treatment | % Area Felting Shrinkage |
|---|---|
| a) 1.5% available chlorine from sodium hypochlorite at pH 7.5 | 5 x 5A |
| i Pretreated wool swatch (no polymer application) | - 44.0 |
| ii 1.5% (solids) Polyamide A | - 2.8 |
| b) 1.5% available chlorine from sodium hypochlorite and 1.5% $KMnO_4$ at pH 7.5 | 2 x 5A |
| i Pretreated wool swatch (no polymer application) | - 45.0 |
| ii 0.5% (solids) Polyamide A | - 6.2 |

EXAMPLE 7

2/24's Botany wool swatches (knitted to a cover factor of 1.29 Direct Tex) were pretreated with a variety of different oxidising agents as mentioned in Examples 4 and 6. Some of the swatches were then treated with a conventional polyamide-epichlorohydrin polymer in the convention manner and the rest with the polyamides of the present invention. The handle of the wool was then assessed by a team of experienced handle assessors. The test was of course carried out "blind", so that the assessors did not know which samples had been treated with a particular polymer beforehand. The results were unanimous -the wool treated with the polyamides of the present invention was in every case considered to have the better handle.

**Claims**

1. A polyamide resulting from the reaction in any order of
   a) bifunctional agent of the formula:

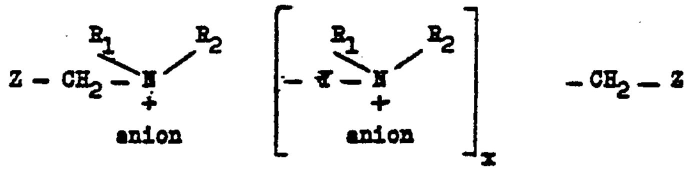

wherein x is zero or a whole number up to 7,
Z is selected from

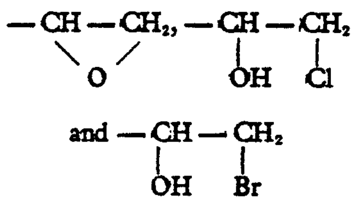

and

each of $R_1$ and $R_2$ is selected from lower alkyl and lower hydroxyalkyl radicals,
Y is selected from alkylene radicals with from 2 to 6 carbon atoms, 2-hydroxy-1,3-propylene radicals, and the radicals

$$-CH_2-CH_2-NH-CO-NH-CH_2-CH_2- \text{ and}$$
$$-CH_2-CH_2-CH_2-NH-CO-NH-CH_2-CH_2-CH_2-,$$

with the proviso that when x is greater than 2(and therefore more than 2 symbols y are present) each of the symbols y need not necessarily have the same significance; with

b) the reaction product of i) a dicarboxylic acid of the formula:
$HOOC-C_m H_{2m}-COOH$
in which m is an integer of from 4 to 8, or a functional derivative of said dicarboxylic acid, and ii) a polyalkylene polyamine containing two primary amino radicals, at least one secondary amino radical and at least two alkylene radicals, the molecular proportion of i) and ii) being 0.85:1 to 1.2.:1, and

c) epichlorohydrin.

2. A polyamide as claimed in claim 1, resulting from

a) reaction with a bifunctional agent of the formula

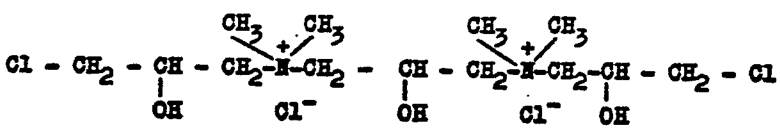

of the reaction product of diethylenetriamine and adipic acid to form a water-soluble intermediate product, and

b) reaction of the intermediate product with epichlorohydrin.

3. A polyamide as claimed in claim 2, wherein b) involves reaction of the intermediate product with from 0.25 to 1.0 equivalents of epichlorohydrin.

4. A process for the preparation of a polyamide which comprises reacting in any order:

a) a bifunctional agent of the formula:

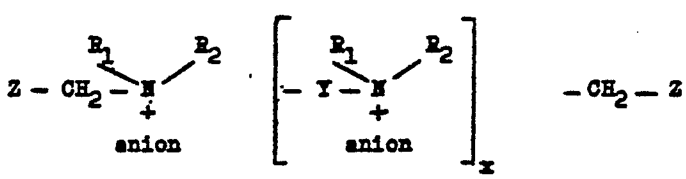

wherein x is zero or a whole number up to 7,

Z is selected from

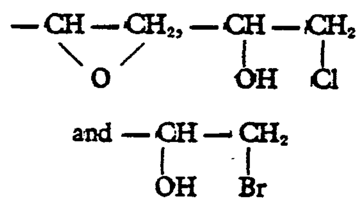

each of $R_1$ and $R_2$ is selected from lower alkyl and lower hydroxylalkyl radicals, Y is selected from alkylene radicals with from 2 to 6 carbon atoms, 2-hydroxy-1,3-propylene radicals, and the radicals

$$-CH_2-CH_2-NH-CO-NH-CH_2-CH_2- \text{ and}$$
$$-CH_2-CH_2-CH_2-NH-CO-NH-CH_2-CH_2-CH_2-,$$

with the proviso that when x is greater than 2(and therefore more than 2 symbols y are present) each of the symbols y need not necessarily have the same significance; with

b) the reaction product of i) a dicarboxylic acid of the formula:

$HOOC\text{-}C_m H_{2m}\text{-}COOH$

in which m is an integer of from 4 to 8, or a functional derivative of said dicarboxylic acid, and ii) a polyalkylene polyamine containing two primary amino radicals, at least one secondary amino radical and at least two alkylene radicals, the molecular proportion of i) and ii) being 0.85:1 to 1.2:1;and

c) epichlorohydrin.

5. A process as claimed in claim 4, wherein the reaction with epichlorohydrin is performed under non-acidic conditions.

6. A method for the treatment of wool so as to impart shrink resistance comprising the steps of:-

i) subjecting the wool to an oxidative chlorinating pretreatment, and

ii) subsequently treating the wool with an aqueous solution of a polymer so as to cause the polymer to be applied to the wool fibres,

characterised in that the polymer used in step ii) is a polyamide resulting from the reaction in any order of:

a) a bifunctional agent of the formula:

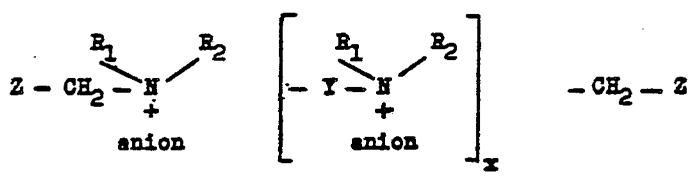

wherein x is zero or a whole number up to 7,

Z is selected from

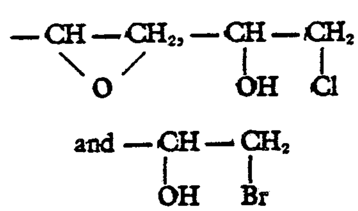

each of $R_1$ and $R_2$ is selected from lower alkyl and lower hydroxyalkyl radicals, Y is selected from alkylene radicals with from 2 to 6 carbon atoms, 2-hydroxy-1,3-propylene radicals, and the radicals

$$-CH_2-CH_2-NH-CO-NH-CH_2-CH_2-$$ and
$$-CH_2-CH_2-CH_2-NH-CO-NH-CH_2-CH_2-CH_2-,$$

with the proviso that when x is greater than 2 (and therefore more than 2 symbols y are present) each of the symbols y need not necessarily have the same significance; with

b) the reaction product of i) a dicarboxylic acid of the formula:

$HOOC\text{-}C_m H_{2m}\text{-}COOH$

in which m is an integer of from 4 to 8, or a functional derivative of said dicarboxylic acid, and ii) a polyalkylene polyamine containing two primary amino radicals, at least one secondary amino radical and at least two alkylene radicals, the molecular proportion of i) and ii) being 0.85:1 to 1.2:1; and

c) epichlorohydrin.

7. A method for the treatment of wool as claimed in claim 6, characterised in that the polymer used in step ii) is a polyamide resulting from

a) reaction with a bifunctional agent of the formula

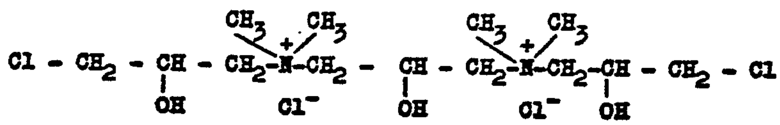

of the reaction product of diethylenetriamine and adipic acid to form a water-soluble intermediate product, and

b) reaction of the intermediate product with epichlorohydrin.

8. A method as claimed in claim 6 or claim 7, wherein the chlorinating pretreatment is carried out at a level of 0.25 - 2.0 % active chlorine ( by weight on the weight of the dry wool).

9. A method as claimed in any one of claims 6 to 8, which is in the form of a batch process.

10. A method as claimed in any one of claims 6 to 8, which is in the form of a continuous process.

European Patent Office

# EUROPEAN SEARCH REPORT

Application number

EP 87307522.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| D,Y | GB - A - 1 213 745 (SANDOZ LTD.)<br>* Claims *<br>-- | 1,2,4, 6,7 | C 08 G 69/00<br>C 08 G 69/48<br>D 01 C 3/00 |
| D,Y | GB - A - 1 074 731 (COMMONWEALTH SCIENTIFIC AND INDUSTRIAL RESEARCH ORGANIZATION)<br>* Claims; page 1, line 69 - page 2, line 18 *<br>-- | 1,2,4, 6-10 | |
| A | US - A - 4 075 177 (BONNET et al.)<br>* Claims; column 5, lines 3-7 *<br>---- | 1-4,6,7 | |

| TECHNICAL FIELDS SEARCHED (Int. Cl.4) |
|---|
| C 08 G 69/00<br>D 01 C |

The present search report has been drawn up for all claims

| Place of search | Date of completion of the search | Examiner |
|---|---|---|
| VIENNA | 14-12-1987 | WEIGERSTORFER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document